# EUROPÄISCHE PATENTSCHRIFT

(11) **EP 0 362 834 B1**
(45) Veröffentlichungstag und Bekanntmachung des Hinweises auf die Patenterteilung: **22.12.1993**
(21) Anmeldenummer: 89118444.2
(22) Anmeldetag: 04.10.1989
(51) Int. Cl.: B60T 1/08, B60T 7/20

(54) **Zusatzbremseinrichtung für Fahrzeuge**
Additional brake device for vehicles
Dispositif de freinage additionnel pour véhicules

(30) Priorität: 05.10.1988 DE 3833761
(43) Veröffentlichungstag der Anmeldung: 11.04.1990
(73) Patentinhaber: Otto Sauer Achsenfabrik Keilberg, 63856 Bessenbach (DE)
(72) Erfinder: Volk, Peter G., Dr.-Ing. c/o KEIL & SCHAAFHAUSEN, D-6000 Frankfurt am Main 1 (DE)
(74) Vertreter: Keil, Rainer A., Dipl.-Phys. Dr.

(56) Entgegenhaltungen:
- WO-A-87/05571
- DE-A- 1 630 801
- DE-A- 1 755 340
- GB-A- 2 181 514

## Beschreibung

Die Erfindung betrifft eine Zusatzbremseinrichtung für Fahrzeuge nach dem Oberbegriff des Anspruchs 1.

Retarder sind als Verzögerungseinrichtungen zum Abbremsen von Fahrzeugen bekannt. Sie dienen als Zusatzbremseinrichtung zur größeren Sicherheit insbesondere von Lastfahrzeugen und Omnibussen neben der herkömmlichen Bremsanlage mit Scheiben- oder Trommelbremsen. Bekannte hydrodynamische Retarder bestehen ähnlich einer hydropneumatischen Kupplung aus zwei einander gegenüberliegenden Schaufelrädern, zwischen deren Kammern zur Steuerung der Leistungsübertragung mehr oder weniger an einer Leistungsübertragungsflüssigkeit, wie Öl, eingeleitet werden kann. Der als Pumpenrad ausgebildete Rotor ist mit der Gelenkwelle des Fahrzeugs verbunden, während der Stator am Gehäuse des Retarders feststeht. Beim Bremsvorgang wird die mechanische Energie der Gelenkwelle mittels des Rotors an die Leistungsübertragungsflüssigkeit übertragen und diese in Rotation versetzt. Die Schaufeln des Stators wirken dem entgegen. Diese Verzögerung überträgt sich auf den Rotor und die Gelenkwelle, die ihrerseits abgebremst werden. Bei der Leistungsvernichtung erwärmt sich die Leistungsübertragungsflüssigkeit, die bspw. einem Kühler zur Abführung der Wärme zugeleitet wird. Bekannte Zusatzbremseinrichtungen mit hydrodynamischem Retarder haben häufig eine nur beschränkte Bremsleistung. Ferner können bei ihnen bei einer Bremsung am Retardergehäuse große, das Gehäuse stark belastende Drehmomente auftreten.

Aus der GB-A-2 181 514 ist zur Beseitigung dieses Nachteils eine Zusatzbremseinrichtung der eingangs genannten Art für Schienenfahrzeuge mit einem Gegenlaufretarder bekannt, wobei die Antriebswellen der beiden Rotoren über Gelenkwellen und Achsgetriebe mit den Fahrzeugachsen verbunden sind. Der bekannte Retarder kann am Fahrzengrahmen aufgehängt sein. Insbesondere bei Fahrzeugen mit Luftfederung ist eine solche Anordnung aber nachteilig, weil der Retarder erheblichen Radialbeschleunigungen unterworfen ist. Das gleiche trifft für die aus der DE-A- 1 755 340 bekannte Fahrzeugachse zu, von welcher aus über ein Kegelradtrieb und eine Gelenkwelle ein hydrodynamischer Verlangsamer angetrieben wird.

Aus der WO-A-8 705 571 ist ein Verfahren zum selbsttätigen Einstellen der pneumatischen Bremsen eines motorgetriebenen Gelenkfahrzeuges bekannt, welches aus einem Zugwagen und einem damit gekoppelten Anhängerwagen besteht, wobei die auf die Zugeinrichtung zwischen den beiden Wagen während des Bremsvorganges ausgeübte Kraft mittels eines Kraftsensors gemessen wird, welcher zwischen den Wagen angeordnet ist.

Aufgabe der vorliegenden Erfindung ist es, eine Zusatzbremseinrichtung der eingangs beschriebenen Art zu schaffen, mit welcher der Retarder bei guter Bremswirkung und geringen auf das Retardergehäuse wirkenden Drehmomenten nur geringen Radialbeschleunigungen unterworfen ist.

Diese Aufgabe wird erfindungsgemäß im wesentlichen dadurch gelöst, daß der Retarder unmittelbar auf der Vorderseite an der letzten Fahrzeugachse angebracht ist.

Durch die gegenläufigen Rotoren wird die Relativgeschwindigkeit zwischen den beiden Schaufelrädern im Vergleich zu herkömmlichen Retardern mit einem Stator und einem Rotor verdoppelt, was eine Erhöhung der Bremswirkung zur Folge hat. Vorteilhafterweise werden dadurch zwei Achsen gebremst. Trotzdem werden beim Bremsvorgang keine Drehmomente in das Retardergehäuse eingeleitet, da die beiden Rotoren sich gegenseitig hemmen. Folglich kann das Retardergehäuse leichter gebaut und z.B. als Ölkühler ausgebildet werden. Da der Retarder unmittelbar vor der letzten Fahrzeugachse angeordnet ist, erfährt er nur geringe Radialbeschleunigungen.

Von besonderem Vorteil ist es, wenn der Retarder am Fahrzeugrahmen aufgehängt ist, damit keine zusätzlichen ungefederten Massen entstehen.

Gemäß einer weiteren bevorzugten Ausführungsform der Erfindung ist vorgesehen, daß der Retarder mit der anderen Fahrzeugachse über eine Gelenkwelle verbunden ist.

Um einen Auflieger oder Anhänger, also diejenigen Fahrzeuge mit der größten Last am besten abbremsen zu können, wird mit der Erfindung vorgeschlagen, daß der Retarder zwischen benachbarten Fahrzeugachsen des Aufliegers oder Anhängers selbst angeordnet ist.

Dabei ist vorzugsweise die Bremsleistung des Retarders insbesondere durch den Fahrer von dem Zugfahrzeug des Aufliegers oder Anhängers aus steuerbar.

Um die Bremsleistung des Retarders einfach an die zu verzögernden Massen anpassen zu können, ist es vorteilhaft, daß die Bremsleistung des Retarders selbsttätig in Abhängigkeit von der von dem Auflieger oder Anhänger auf das Zugfahrzeug wirkenden Schubkraft regelbar ist.

Zur Erzielung einer von der Schubkraft abhängigen Bremsleistung sieht eine weitere bevorzugte Ausführungsform der Erfindung vor, daß der Retarder unterhalb eines unteren Schwellenwertes für die Schubkraft von der Leistungsübertragungsflüssigkeit im wesentlichen vollständig entleert und oberhalb eines oberen Schwellenwertes bis zur maximalen Bremsleistung mit der Übertragungsflüssigkeit gefüllt wird. Zwischen dem oberen und unteren Schwellenwert sind zweckmäßigerweise Zu- und Ablauf der Leistungsübertragungsflüssigkeit des Retarders zur Aufrechterhaltung einer im wesentlichen konstanten Bremsleistung im wesentlichen gleich.

Um die auf das Zugfahrzeug wirkende Schubkraft selbsttätig zu ermitteln, kann vorgesehen sein, daß die Schubkraft des Aufliegers oder Anhängers auf das Zugfahrzeug über einen Sensor in der Aufliegerplatte oder der Kupplung zwischen Zugfahrzeug und Auflieger bzw. Anhänger erfaßt wird.

Weitere Ziele, Merkmale, Vorteile und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der Erfindung, unabhängig von ihrer Zusammenfassung in den Ansprüchen oder deren Rückbeziehung.

Es zeigen:
- Fig. 1: schematisch den erfindungsgemäß einzusetzenden Retarder im Schnitt, und
- Fig. 2: schematisch eine erfindungsgemäße Zusatzbremseinrichtung gemäß einer Ausgestaltung an einem Fahrzeug.

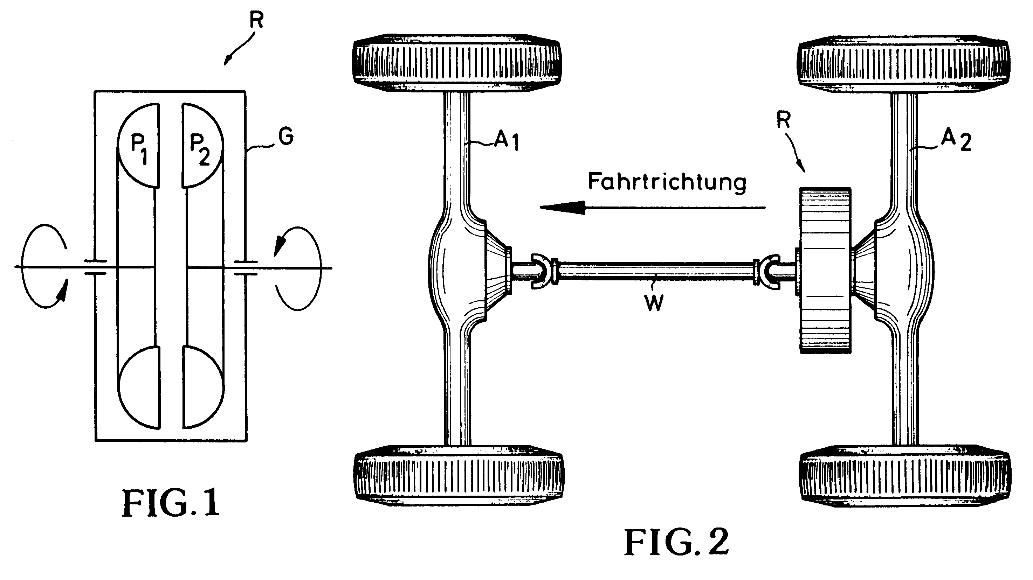

Der in Fig. 1 dargestellte Retarder R weist in seinem Gehäuse G zwei Rotoren P₁ und P₂ auf, die gemäß Fig. 2 von benachbarten Fahrzeugachsen A₁ und A₂ eines Fahrzeuges, bspw. eines Aufliegers oder Anhängers gegenläufig angetrieben sind. Bei der dargstellten Ausführungsform ist der Retarder R unmittelbar an der hinteren Fahrzeugachse A₂ angeordnet, während er mit der anderen Fahrzeugachse A₁ über eine Gelenkwelle W antriebsmäßig verbunden ist.

Die Bremsleistung des Retarders R ist, auch wenn diese am Auflieger oder Anhänger vorgesehen ist, von dem Zugfahrzeug des Anliegers oder Anhängers aus steuerbar. Vorzugsweise ist sie selbsttätig in Abhängigkeit von der von dem Auflieger oder Anhänger auf das Zugfahrzeug wirkenden Schubkraft regelbar.

Unterhalb eines unteren Schwellenwertes für die Schubkraft ist der Retarder R im wesentlichen vollständig von der Leistungsübertragungsflüssigkeit entleert, während er oberhalb eines oberen Schwellenwertes bis zur maximalen Bremsleistung mit der Leistungsübertragungsflüssigkeit gefüllt ist. Zwischen den beiden Schwellenwerten ist der Zu- und Ablauf der Leistungsübertragungsflüssigkeit des Retarders R zur Aufrechterhaltung einer im wesentlichen konstanten Bremsleistung im wesentlichen gleich.

Die Schubkraft zur Regelung der Bremsleistung des Aufliegers oder Anhängers auf das Zugfahrzeug kann über einen Sensor in der Aufliegerplatte oder Kupplung zwischen Zugfahrzeug und Auflieger bzw. Anhänger erfaßt werden.

### Bezugszeichenliste:

- A₁: Fahrzeugachse
- A₂: Fahrzeugachse
- G: Gehäuse
- P₁: Rotor
- P₂: Rotor
- R: Retarder
- W: Gelenkwelle

## Patentansprüche

1. Zusatzbremseinrichtung für Fahrzeuge, insbesondere Lastfahrzeuge, mit einem Retarder (R) (einer hydrodynamischen Bremse), welcher in einem Gehäuse (G) zwei Rotoren (P₁, P₂) aufweist, welche von benachbarten Fahrzeugachsen (A₁, A₂) gegenläufig antreibbar sind, dadurch gekennzeichnet, daß der Retarder (R) unmittelbar an der Vorderseite der hinteren Fahrzeugachse (A₂) angebracht ist.

2. Zusatzbremseinrichtung nach Anspruch 1, dadurch gekennzeichnet, daß der Retarder (R) am Fahrzeugrahmen aufgehängt ist.

3. Zusatzbremseinrichtung nach Anspruch 1 oder 2, dadurch gekennzeichnet, daß der Retarder (R) mit der anderen Fahrzeugachse (A₁) über eine Gelenkwelle (W) verbunden ist.

4. Zusatzbremseinrichtung nach einem der Ansprüche 1 bis 3, dadurch gekennzeichnet, daß der Retarder (R) zwischen benachbarten Fahrzeugachsen (A₁, A₂) eines Aufliegers oder Anhängers angeordnet ist.

5. Zusatzbremseinrichtung nach Anspruch 4, dadurch gekennzeichnet, daß die Bremsleistung des Retarders (R) von dem Zugfahrzeug des Aufliegers oder Anhängers aus steuerbar ist.

6. Zusatzbremseinrichtung nach Anspruch 4 oder 5, dadurch gekennzeichnet, daß die Bremsleistung des Retarders (R) selsttätig in Abhängigkeit von der von dem Auflieger oder Anhängers auf das Zugfahrzeug wirkenden Schubkraft regelbar ist.

7. Zusatzbremseinrichtung nach Anspruch 6, dadurch gekennzeichnet, daß der Retarder (R) unterhalb eines unteren Schwellenwertes für die Schubkraft von der Leistungsübertragungsflüssigkeit im wesentlichen vollständig entleert und oberhalb eines oberen Schwellenwertes bis zur maximalen Bremsleistung mit der Leistungsübertragungsflüssigkeit gefüllt wird und daß zwischen den beiden Schwellenwerten Zu- und Ablauf der Leistungsübertragungsflüssigkeit des Retarders (R) zur Aufrechterhaltung einer im wesentlichen konstanten Bremsleistung im wesentlichen gleich sind.

8. Zusatzbremseinrichtung nach einem der Ansprüche 4 bis 7, dadurch gekennzeichnet, daß die Schubkraft des Aufliegers oder Anhängers auf das Zugfahrzeug über einen Sensor in der Aufliegerplatte oder der Kupplung zwischen Zugfahrzeug und Auflieger bzw. Anhänger erfaßt wird.

## Claims

1. Additional braking device for vehicles, in particular heavy goods vehicles, having a retarder (R) (a hydrodynamic brake) which in a housing (G) has two rotors (P₁, P₂) which can be driven by adjacent vehicle axles (A₁, A₂) in opposite directions, characterised in that the retarder (R) is installed directly on the front side of the rear vehicle axle (A₂).

2. Additional braking device according to claim 1, characterised in that the retarder (R) is suspended on the vehicle frame.

3. Additional braking device according to claim 1 or 2, characterised in that the retarder (R) is connected with the other vehicle axle (A₁) by way of an articulated shaft (W).

4. Additional braking device according to one of the claims 1 to 3, characterised in that the retarder (R) is arranged between adjacent vehicle axles (A₁, A₂) of a semi-trailer or trailer.

5. Additional braking device according to claim 4, characterised in that the braking power of the retarder (R) can be controlled from the traction vehicle of the semi-trailer or trailer.

6. Additional braking device according to claim 4 or 5, characterised in that the braking power of the retarder (R) can be controlled automatically as a function of the thrust which acts on the traction vehicle from the semi-trailer or trailer.

7. Additional braking device according to claim 6, characterised in that the retarder (R) is substantially completely drained of the power transmission fluid below a lower threshold value for the thrust and is filled with the power transmission fluid above an upper threshold value up to the maximum braking power and in that between the two threshold values supply and discharge of the power transmission fluid of the retarder (R) is substantially the same for the purpose of maintaining a substantially constant braking power.

8. Additional braking device according to one of the claims 4 to 7, characterised in that the thrust of the semi-trailer or trailer on the traction vehicle is detected by way of a sensor in the semi-trailer plate or in the coupling between traction vehicle and semi-trailer or trailer respectively.

## Revendications

1. Dispositif de freinage auxiliaire pour véhicules, en particulier pour camions, comportant un ralentisseur (R) (un frein hydrodynamique) qui présente, à l'intérieur d'un carter (G), deux rotors (P₁, P₂) qui peuvent être entraînés dans des sens opposés par des essieux (A₁, A₂) du véhicule voisins, caractérisé par le fait que le ralentisseur (R) est monté directement sur le côté antérieur de l'essieu (A₂) arrière du véhicule.

2. Dispositif de freinage auxiliaire selon la revendication 1, caractérisé par le fait que le ralentisseur (R) est fixé sur le châssis du véhicule.

3. Dispositif de freinage auxiliaire selon la revendication 1 ou 2, caractérisé par le fait que le ralentisseur (R) est relié à l'autre essieu (A₁) du véhicule par l'intermédiaire d'un arbre articulé (W).

4. Dispositif de freinage auxiliaire selon l'une des revendications 1 à 3, caractérisé par le fait que le ralentisseur (R) est disposé entre des essieux (A₁, A₂) voisins d'une semi-remorque ou d'une remorque.

5. Dispositif de freinage auxiliaire selon la revendication 4, caractérisé par le fait que la puissance de freinage du ralentisseur (R) peut être réglée à partir du tracteur de la semi-remorque ou de la remorque.

6. Dispositif de freinage auxiliaire selon la revendication 4 ou 5, caractérisé par le fait que la puissance de freinage du ralentisseur (R) est réglée de manière automatique en fonction de l'effort de traction exercé par la semi-remorque ou la remorque sur le tracteur.

7. Dispositif de freinage auxiliaire selon la revendication 6, caractérisé par le fait que le ralentisseur (R), au-dessous d'un seuil inférieur pour l'effort de traction, est vidé sensiblement complètement du liquide de transmission du couple et, au-delà d'un seuil supérieur jusqu'à la puissance de freinage maximale, est rempli avec le liquide de transmission du couple et par le fait qu'entre les deux seuils, l'entrée et la sortie de liquide de transmission du couple dans le ralentisseur (R) sont sensiblement égales afin de maintenir une puissance de freinage sensiblement constante.

8. Dispositif de freinage auxiliaire selon l'une des revendications 4 à 7, caractérisé par le fait que l'effort de traction de la semi-remorque ou de la remorque sur le tracteur est mesuré par l'intermédiaire d'un capteur disposé dans la sellette d'attelage ou dans l'attelage entre tracteur et semi-remorque ou remorque.
